# EUROPEAN PATENT APPLICATION

(11) **EP 4 489 474 A1**
(43) Date of publication of application: **08.01.2025**
(21) Application number: 23778089.5
(22) Date of filing: 27.03.2023
(51) Int. Cl.: H04W 28/24

(54) **COMMUNICATION SERVICE GUARANTEE METHOD AND DEVICE**

(30) Priority: 01.04.2022 CN 202210338611
(71) Applicant: Huawei Technologies Co., Ltd., Shenzhen, Guangdong 518129 (CN)
(72) Inventor: ZHANG, Jian, Shenzhen, Guangdong 518129 (CN); LU, Yang, Shenzhen, Guangdong 518129 (CN); WANG, Man, Shenzhen, Guangdong 518129 (CN)
(74) Representative: Körber, Martin Hans
(86) International application number: PCT/CN2023/084043
(87) International publication number: WO 2023/185722

(57) **Abstract**

This application discloses a communication service assurance method and apparatus. The method includes: A communication service assurance management functional entity obtains requirement information of a deterministic communication service from a communication service consumption functional entity, where the requirement information includes a latency requirement and a reliability requirement; then determines network function configuration information based on the requirement information, where the network function configuration information includes a network function configuration or configuration requirement indication information; and finally sends the network function configuration information to a managed object, so that the managed object configures a network function of a network slice based on the network function configuration information. According to embodiments of this application, a network function configuration that supports the requirement information can be obtained, to assure a deterministic communication service procedure.

## Description

This application claims priority to Chinese Patent Application No. 202210338611.1, filed with the China National Intellectual Property Administration on April 1, 2022 and entitled "COMMUNICATION SERVICE ASSURANCE METHOD AND APPARATUS", which is incorporated herein by reference in its entirety.

### TECHNICAL FIELD

This application relates to the field of wireless communication technologies, and in particular, to a communication service assurance method and apparatus.

### BACKGROUND

Deterministic communication (deterministic communication) is communication in which message transmission time is within a given time threshold and transmission reliability is assured, and may also be referred to as time-sensitive communication (TSC, a time-sensitive communication service). The deterministic communication includes two types: periodic deterministic communication and aperiodic deterministic communication. For the periodic deterministic communication, change time of a transmission interval is bounded. For example, latency between sending a message by a message sender and receiving the sent message by a message receiver is within limited time, and the latency is stable within a preset boundary. Some typical quality of service (quality of service, QoS) features of a deterministic communication service include service availability, end-to-end latency, a target value of the transmission interval, a minimum boundary value of the transmission interval, a maximum boundary value of the transmission interval, survival time (survival time), and the like. A 3rd generation partnership project (3rd generation partnership project, 3GPP) 5th generation mobile communication technology (5th generation mobile communication technology, 5G) or an evolved communication system thereof supports the deterministic communication service.

The 5th generation mobile communication technology or the evolved communication system thereof further supports a non-deterministic communication service, for example, a best-effort (best-effort) communication service. In a conventional technology, a corresponding network capability may be managed for the non-deterministic communication service. However, how to manage and configure, based on a specific requirement of the deterministic communication service, a network capability for supporting the deterministic communication service to assure the deterministic communication service is an urgent problem to be resolved.

### SUMMARY

Embodiments of this application provide a communication service assurance method and apparatus, to obtain, based on requirement information of a deterministic communication service, a network function configuration that supports the requirement information, and assure the deterministic communication service.

According to a first aspect, a communication service assurance method is provided, and is applied to a communication service assurance management functional entity. The method includes: obtaining requirement information of a deterministic communication service from a communication service consumption functional entity, where the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range; determining network function configuration information based on the requirement information, where the network function configuration information includes a network function configuration or configuration requirement indication information, and the network function configuration or the configuration requirement indication information is used to enable a managed object to obtain a network capability for supporting the requirement information of the deterministic communication service; and sending the network function configuration information to the managed object.

It can be learned that in this embodiment of this application, the requirement information that is of the deterministic communication service and that is obtained by the communication service assurance management functional entity from the communication service consumption functional entity includes the latency requirement and the reliability requirement. Then, the corresponding network function configuration information is obtained based on the requirement information, and the network function configuration information is sent to the managed object, so that the managed object configures a network function based on the network function configuration, to obtain the network capability for supporting the latency requirement and the reliability requirement, and assure the deterministic communication service.

In a possible design, the sending the network function configuration information to the managed object includes: sending the network function configuration to a provisioning management entity, and sending the network function configuration to the managed object through the provisioning management entity; or sending the configuration requirement indication information to a provisioned management entity, where provisioned requirement indication information is used by the provisioned management entity to obtain the network function configuration; and sending the network function configuration to the managed object through the provisioned management entity.

In a possible design, the deterministic communication service includes a periodic deterministic communication service and an aperiodic deterministic communication service. When the deterministic communication service is the periodic deterministic communication service, the latency requirement further indicates that a latency jitter of each data packet is within a second preset time threshold.

In a possible design, before the obtaining requirement information of a deterministic communication service from a communication service consumption functional entity, the method further includes:
obtaining, from the communication service consumption functional entity, an intent of assuring the deterministic communication service; and
the obtaining requirement information of a deterministic communication service from a communication service consumption functional entity includes:
   generating the requirement information of the deterministic communication service based on the intent that is of assuring the deterministic communication service and that is obtained from the communication service consumption functional entity.

In a possible design, the managed object includes one or more of the following: a network slice, a radio access network RAN network element, a core network CN network element, a transmission network TN network element, a RAN network slice subnet, a CN network slice subnet, or a TN network slice subnet.

In a possible design, the network function configuration includes a latency-related network function configuration and/or a reliability-related network function configuration.

In a possible design, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover method; or
the CN-latency-related network function configuration includes at least one of the following: a local user plane function UPF configuration, a multi-access edge computing MEC configuration, or a service continuity policy.

It can be learned that in this embodiment of this application, the latency-related network function configuration performed based on the requirement information of the deterministic communication service includes the RAN-latency-related network function configuration and the CN-latency-related network configuration. It is mainly considered that a low-latency requirement of the deterministic communication service can be met by reducing latency in a communication connection process, a communication handover process, or a data transmission process.

In a possible design, the reliability-related network function configuration includes a CN-reliability-related network function configuration and/or a RAN-reliability-related network function configuration, where the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration includes a UPF multi-connection redundant transmission method.

It can be learned that in this embodiment of this application, the reliability-related network function configuration performed based on the requirement information of the deterministic communication service includes the RAN-reliability-related network function configuration and the CN-reliability-related network configuration. It is mainly considered that an effect of improving reliability can be achieved by adding a redundant connection point, a redundant transmission line, and a redundant transmission data packet, to meet a high-reliability requirement of the deterministic communication service.

In a possible design, the requirement information is included in a service requirement profile of a network slice or a requirement profile of a network slice subnet.

According to a second aspect, a communication service assurance method is provided, and is applied to a managed object. The method includes:
receiving a network function configuration sent by a communication service assurance management functional entity or a provisioning management entity, where the network function configuration is used to enable the managed object to obtain a network capability for supporting requirement information of a deterministic communication service, and the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range; and
configuring, based on the network function configuration, a network function corresponding to the managed object.

In a possible design, the managed object includes one or more of the following: a network slice, a radio access network RAN network element, a core network CN network element, a transmission network TN network element, a RAN network slice subnet, a CN network slice subnet, or a TN network slice subnet.

In a possible design, the network function configuration includes a latency-related network function configuration and/or a reliability-related network function configuration.

In a possible design, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover method; or
the CN-latency-related network function configuration includes at least one of the following: a local user plane function UPF configuration, a multi-access edge computing MEC configuration, or a service continuity policy.

In a possible design, the reliability-related network function configuration includes a CN-reliability-related network function configuration and a RAN-reliability-related network function configuration, where
the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration includes a UPF multi-connection redundant transmission method.

In a possible design, the method further includes: sending a response message to the communication service assurance management functional entity or the provisioning management entity, where the response message includes configuration result information for the network function configuration.

According to a third aspect, a communication service assurance apparatus is provided, and is used in a communication service assurance management functional entity. The apparatus includes:
a receiving unit, configured to obtain requirement information of a deterministic communication service from a communication service consumption functional entity, where the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range;
a processing unit, configured to determine network function configuration information based on the requirement information, where the network function configuration information includes a network function configuration or configuration requirement indication information, and the network function configuration or the configuration requirement indication information is used to enable a managed object to obtain a network capability for supporting the requirement information of the deterministic communication service; and
a sending unit, configured to send the network function configuration information to the managed object.

In a possible design, the sending the network function configuration to the managed object includes: sending the network function configuration to a provisioning management entity, and sending the network function configuration to the managed object through the provisioning management entity; or sending the configuration requirement indication to a provisioned management entity, where provisioned requirement indication is used by the provisioned management entity to obtain the network function configuration; and sending the network function configuration to the managed object through the provisioned management entity.

In a possible design, before obtaining the requirement information of the deterministic communication service from the communication service consumption functional entity, the receiving unit is further configured to:
obtain, from the communication service consumption functional entity, an intent of assuring the deterministic communication service; and
the processing unit is specifically configured to:
   generate the requirement information of the deterministic communication service based on the intent that is of assuring the deterministic communication service and that is obtained from the communication service consumption functional entity.

In a possible design, the managed object includes one or more of the following: a network slice, a radio access network RAN network element, a core network CN network element, a transmission network TN network element, a RAN network slice subnet, a CN network slice subnet, or a TN network slice subnet.

In a possible design, the network function configuration includes a latency-related network function configuration and/or a reliability-related network function configuration.

In a possible design, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration includes at least one of the following: a local user plane function UPF configuration, a multi-access edge computing MEC configuration, or a service continuity policy.

In a possible design, the reliability-related network function configuration includes a CN-reliability-related network function configuration and/or a RAN-reliability-related network function configuration, where the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration includes a UPF multi-connection redundant transmission apparatus.

In a possible design, the requirement information is included in a service requirement profile of a network slice or a requirement profile of a network slice subnet.

According to a fourth aspect, a communication service assurance apparatus is provided, and is used in a managed object. The apparatus includes:
receiving a network function configuration sent by a communication service assurance management functional entity or a provisioning management entity, where the network function configuration is used to enable the managed object to obtain a network capability for supporting requirement information of a deterministic communication service, and the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range; and
configuring, based on the network function configuration, a network function corresponding to the managed object.

In a possible design, the managed object includes one or more of the following: a network slice, a radio access network RAN network element, a core network CN network element, a transmission network TN network element, a RAN network slice subnet, a CN network slice subnet, or a TN network slice subnet.

In a possible design, the network function configuration includes a latency-related network function configuration and/or a reliability-related network function configuration.

In a possible design, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration includes at least one of the following: a local user plane function UPF configuration, a multi-access edge computing MEC configuration, or a service continuity policy.

In a possible design, the reliability-related network function configuration includes a CN-reliability-related network function configuration and a RAN-reliability-related network function configuration, where
the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or the CN-reliability-related network function configuration includes a UPF multi-connection redundant transmission apparatus.

In a possible design, a sending unit is further configured to send a response message to the communication service assurance management functional entity or the provisioning management entity, where the response message includes configuration result information for the network function configuration.

According to a fifth aspect, an embodiment of this application provides a network device or a terminal device, including:
a memory, configured to store instructions; and
at least one processor, coupled to the memory.

When the at least one processor executes the instructions, the instructions enable the processor to perform the method in the first aspect or the second aspect.

According to a sixth aspect, an embodiment of this application provides a chip system, including a processor. The processor is coupled to a memory, and the memory is configured to store a program or instructions. When the program or the instructions are executed by the processor, the chip system is enabled to implement the method in the first aspect or the second aspect.

Optionally, the chip system further includes an interface circuit, and the interface circuit is configured to exchange code instructions to the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a seventh aspect, an embodiment of this application provides a computer-readable storage medium. The computer-readable storage medium stores a computer program or instructions. When the computer program or the instructions are executed, a computer is enabled to perform the method in the first aspect or the second aspect.

According to an eighth aspect, an embodiment of this application provides a computer program product. When a computer reads and executes the computer program product, the computer is enabled to perform the method in any one of the possible implementations of either the first aspect or the second aspect.

According to a ninth aspect, an embodiment of this application provides a communication system. The communication system includes the apparatus in the third aspect and/or the fourth aspect.

### BRIEF DESCRIPTION OF DRAWINGS

To describe technical solutions in embodiments of this application more clearly, the following briefly describes the accompanying drawings needed for describing embodiments.
FIG. 1 is a flowchart of a communication service assurance method according to an embodiment of this application;
FIG. 2 is a flowchart of a communication service assurance method according to an embodiment of this application;
FIG. 3 is a flowchart of a communication service measurement method according to an embodiment of this application;
FIG. 4 is a flowchart of another communication service measurement method according to an embodiment of this application;
FIG. 5 is a block diagram of a structure of a communication service assurance apparatus according to an embodiment of this application;
FIG. 6 is a block diagram of a structure of another communication service assurance apparatus according to an embodiment of this application; and
FIG. 7 is a diagram of a hardware structure of a communication apparatus according to an embodiment of this application.

### DESCRIPTION OF EMBODIMENTS

In the specification, claims, and accompanying drawings of this application, the terms "first", "second", "third", "fourth", and the like are intended to distinguish between different objects, but are not intended to describe a particular sequence. In addition, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a particular feature, structure, or characteristic described with reference to the embodiment may be included in at least one embodiment of this application. The phrase shown in various locations in the specification may not necessarily refer to a same embodiment, and is not an independent or alternative embodiment exclusive from another embodiment. It is explicitly and implicitly understood by a person skilled in the art that embodiments described in the specification may be combined with another embodiment.

"A plurality of" means two or more than two. "And/or" describes an association relationship for describing associated objects and represents that three relationships may exist. For example, A and/or B may represent the following three cases: Only A exists, both A and B exist, and only B exists. The character "/" generally represents an "or" relationship between the associated objects.

First, a process of assuring a non-deterministic communication service is described.

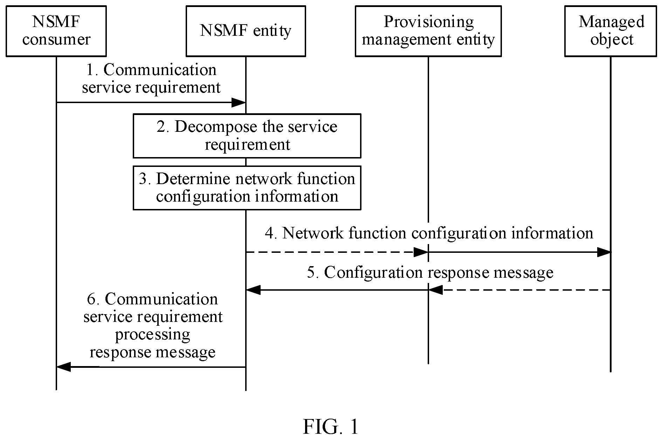

FIG. 1 is a flowchart of a communication service assurance method according to an embodiment of this application. As shown in FIG. 1, the method includes the following steps.
1. An NSMF consumer sends a communication service requirement to an NSMF entity.

A network architecture for communication service assurance includes the network slice management function (network slice management function, NSMF) consumer (consumer), the NSMF entity, a provisioning management entity (provisioning management entity), and a managed object.

The NSMF consumer may be, for example, a requirement input module used by an industry vertical tenant, and is an entity that submits a network slice requirement. The NSMF entity is configured to: receive the network slice requirement, convert the received network slice requirement into a network slice subnet requirement, and send the network slice subnet requirement to a network slice subnet management function (network slice subnet management function, NSSMF). The managed object may specifically include one or more of the following: a network slice (network slice), a radio access network (wireless access network, RAN) network element, a core network (core network, CN) network element, a transmission network (transmission network, TN) network element, a RAN network slice subnet, a CN network slice subnet, a TN network slice subnet, or the like. The network slice is a combination of the CN network slice subnet, the RAN network slice subnet, and/or the TN network slice subnet.

In some cases, the network architecture further includes the provisioning management entity, configured to: receive a network function configuration or configuration requirement indication information sent by the NSMF entity, generate configuration information of managed objects based on these requirements, and send the configuration information to the corresponding managed objects, so that the managed object configures the managed object based on the configuration information.

The communication service requirement may be a service level specification (service level specification, SLS) requirement or a quality of service (quality of service, QoS) requirement. An SLS is a related technical index specification in a service level agreement (service level agreement, SLA). QoS is a technology that provides a better service capability for specified network communication to resolve problems such as network latency and congestion. It should be noted that the communication service requirement means that requirement information such as the SLS or the QoS is provided for the NSMF entity by using a service network slice service description profile (ServiceProfile).
2. Assuming that the NSMF entity receives the communication service requirement (in a form of the network slice service description profile), the NSMF entity may decompose the service requirement to obtain a slice service requirement corresponding to each managed object, in other words, a service requirement in a form of a network slice description profile (SliceProfile). SliceProfile may include TopSliceProfile, RANSliceProfile, CNSliceProfile, and TNSliceProfile. In addition, the requirement information may be included in an application requirement profile, and the application requirement profile may be included in ServiceProfile or each network slice description profile SliceProfile. The communication service requirement is decomposed into the slice service requirement. For example, if a latency requirement submitted based on the communication service requirement is less than 30s (seconds), the slice service requirement obtained through decomposition may be as follows: A latency requirement of the RAN slice subnet is less than 15s, a latency requirement of the TN slice subnet is less than 5s, and a latency requirement of the CN slice subnet is less than 5s.
3. The NSMF entity analyzes or prepares the network function configuration or the configuration requirement indication information based on the slice service requirement. After obtaining the slice service requirement corresponding to each managed object, the NSMF entity may determine a network function configuration of each managed object based on the slice service requirement. For example, to meet a latency requirement, in one aspect, it needs to be ensured that a RAN, a CN, and a TN can perform normal transmission; in another aspect, there is also a requirement on bandwidth. Therefore, the network function configuration may include a connection configuration and a bandwidth configuration.
4. The NSMF entity sends the determined network function configuration to the managed object; or the NSFM entity sends the determined network function configuration to the provisioning management entity, and the provisioning management entity forwards the determined network function configuration to the managed object.
5. The managed object sends a configuration response message to the provisioning management entity or the NSMF entity. The managed object configures a network function of the managed object based on information about the received network function configuration. After the configuration is completed, the managed object feeds back the configuration response message to the NSMF entity; or the managed object feeds back the configuration response message to the provisioning management entity, and then the provisioning management entity forwards the configuration response message to the NSMF entity. The configuration response message is used to feed back whether the configuration succeeds, an actual configuration of the function of the managed object, or the like.
6. The NSMF entity sends a communication service requirement processing response message to the NSMF consumer. Similarly, the communication service requirement processing response message sent by the NSMF entity to the NSMF consumer may be the configuration response message that is sent by the managed object and that is directly forwarded, or may be a communication service requirement processing response message sent to the NSMF consumer after the NSMF entity further interprets and encapsulates the received configuration response message.

A conventional communication service, for example, a best-effort communication service, specifically includes video downloading, web page refreshing, and the like. An objective of the conventional communication service is to implement a communication process as much as possible. Therefore, a precision requirement of the conventional communication service on a requirement parameter of a communication process is low. The conventional communication service is mainly for meeting a connection requirement or a bandwidth requirement. However, for a deterministic communication service, because the deterministic communication service and the conventional communication service have different communication requirements, network capabilities that need to be obtained for communication service assurance are also different. The foregoing process is insufficient to provide service assurance for the deterministic communication service.

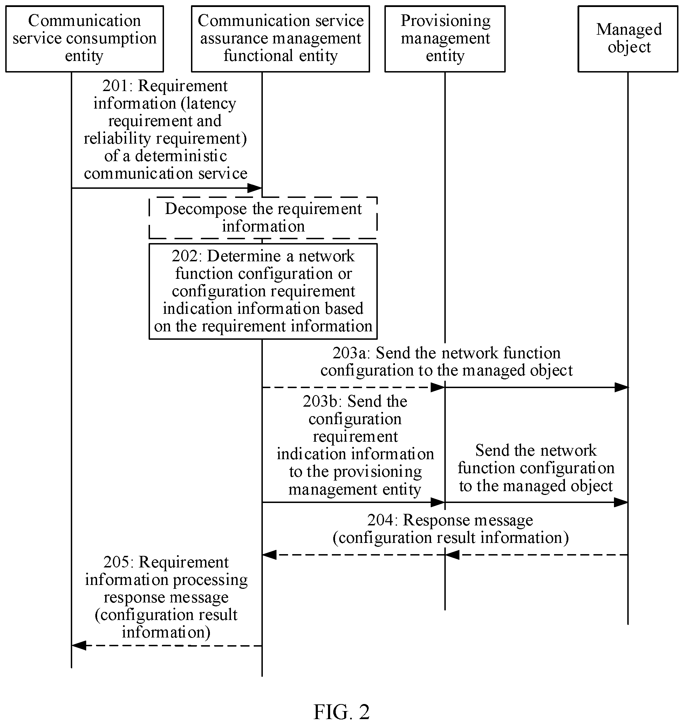

In view of this, FIG. 2 is a flowchart of a communication service assurance method according to an embodiment of this application, to assure performing of a deterministic communication service. As shown in FIG. 2, the method includes the following steps.

201: A communication service assurance management functional entity obtains requirement information of the deterministic communication service from a communication service consumption functional entity.

The requirement information includes a latency requirement and a reliability requirement. The latency requirement indicates that transmission time of each data packet of the deterministic communication service is within a preset time threshold, and the reliability requirement indicates that a packet loss rate of the deterministic communication service is within a preset range. The transmission time is time required from sending a data packet by a transmit end to receiving the data packet by a receive end.

The communication service assurance management functional entity is a management plane entity configured to perform communication service assurance on the deterministic communication service. The entity may be an independent entity, or may be a combined entity with an NSMF entity. In other words, the communication service assurance management functional entity is a functional module of the NSMF entity. The communication service assurance management functional entity further supports distributed deployment, for example, is divided into a central communication service assurance functional entity and a distributed communication service assurance functional entity. The central communication service assurance functional entity is located at a cross-domain management layer, and may cover, for example, two or more management ranges of RAN domain management, CN domain management, and TN domain management. The distributed communication service assurance functional entity is located at a single-domain management layer, and can cover, for example, only the RAN domain management, the CN domain management, the TN domain management, or a part of the domain management. When the communication service assurance management functional entity supports the distributed deployment, an entity responsible for cross-domain management may be co-deployed with the NSMF entity, and an entity responsible for single-domain management may be co-deployed with a RAN NSSMF, a CN NSSMF, and/or a TN NSSMF.

The communication service consumption functional entity (a consumer) may be, for example, another management functional entity such as the NSMF entity, or may be an NSMF consumer such as a requirement input module used by a vertical industry tenant, and is an entity that submits a network slice requirement to the communication service assurance management functional entity. The communication service consumption functional entity and the communication service assurance management functional entity may be communicatively connected through a service-based management interface. Specifically, for example, the communication service consumption functional entity and the communication service assurance management functional entity may transfer a message by using the HTTP2.

When the communication service consumption functional entity needs to create or modify a network slice that supports the deterministic communication service, specifically, for example, when the vertical industry tenant needs to obtain a network slice service from a supplier to support a campus industrial control application of the vertical industry tenant, the communication service consumption functional entity may send the requirement information of the deterministic communication service to the communication service assurance management functional entity.

The communication service assurance management functional entity receives the requirement information of the deterministic communication service. The requirement information includes the latency requirement and the reliability requirement. In addition, the latency requirement indicates that a time difference between sending each data packet of the deterministic communication service by the transmit end and receiving the data packet by the receive end is within the preset time threshold. The reliability requirement indicates that the packet loss rate of the deterministic communication service is within the preset range. In a possible case, the packet loss rate may be a packet loss rate of a complete communication service process. For example, a total of 100 data packets need to be sent for one communication service. If any one of the data packets is lost in a transmission process, a packet loss rate of the communication service is 1%. Alternatively, the packet loss rate may be a proportion of a currently lost data packet to a data packet that has been sent for a current communication service. For example, if a current data packet is lost, and 19 data packets have been successfully sent previously, the packet loss rate is 1/(19+1)=5%.

The deterministic communication service has a high requirement on precision of the latency requirement and the reliability requirement. A data packet whose latency is greater than a preset threshold may cause a case in which a subsequent data packet cannot arrive at the receive end on time. That the packet loss rate is greater than the preset range may cause a case in which the service cannot be smoothly performed. It is assumed that the preset time threshold is 200 ms (milliseconds), to be specific, transmission latency of each data packet needs to be less than 200 ms, and the preset range is, for example, 0.01%, to be specific, the packet loss rate of the communication service needs to be less than 0.01%. In this case, for example, when transmission latency of a data packet 1 of the deterministic communication service is greater than 200 ms, and in this case, the packet loss rate of the communication service is 0, the data packet 1 may be lost, and the packet loss rate of the communication service is 0.001%. In this case, the packet loss rate is less than 0.01%, and the communication service may be continued. However, when transmission latency of a data packet 2 is greater than 200 ms, the data packet 2 is lost, and the packet loss rate of the communication service reaches 0.02%. In this case, the packet loss rate is not within the preset range, and the communication service cannot be continued.

In some cases, the deterministic communication service includes a periodic deterministic communication service and an aperiodic deterministic communication service. When the deterministic communication service is the periodic deterministic communication service, the latency requirement further indicates that a latency jitter of each data packet is within a second preset time threshold, in other words, a latency difference value of deterministic communication services in different periodicities needs to be within a stable range. For example, within a previous periodicity T1, transmission latency of each data packet is 30 ms. Assuming that the second preset time threshold is ±5 ms, within a following periodicity T2, the transmission latency of each data packet needs to range from 25 ms to 35 ms.

To assure that the deterministic communication service is smoothly performed, the latency requirement and the reliability requirement need to be simultaneously met.

In a possible case, before the requirement information of the deterministic communication service is obtained from the communication service consumption functional entity, the method further includes: obtaining, from the communication service consumption functional entity, an intent of assuring the deterministic communication service. Obtaining the requirement information of the deterministic communication service from the communication service consumption functional entity includes: generating the requirement information of the deterministic communication service based on the intent that is of assuring the deterministic communication service and that is obtained from the communication service consumption functional entity.

As described in the foregoing embodiment, the requirement information may be provided by using a service network slice service description profile, and requirement information that is not provided in this manner may be referred to as a communication service assurance intent. After obtaining the communication service assurance intent, the communication service assurance management functional entity may assemble the communication service assurance intent into the service network slice service description profile, to obtain a communication service requirement.

Alternatively, it is assumed that the communication service assurance management functional entity obtains requirement information of a plurality of applications from a plurality of application entities, that is, submits the requirement information in an application requirement profile (AppProfile) manner, or may assemble an application requirement profile to obtain requirement information in a form of the service network slice service description profile.

As disclosed in this embodiment of this application, the requirement information corresponding to the deterministic communication service needs to include both the latency requirement and the reliability requirement. This greatly reflects a characteristic of the deterministic communication service, and also helps the communication service assurance management functional entity determine whether a current service is the deterministic communication service, so that a subsequent process of determining a network function configuration is performed.

202: The communication service assurance management functional entity determines network function configuration information based on the requirement information, where the network function configuration information includes the network function configuration or configuration requirement indication information, and the network function configuration or the configuration requirement indication information is used to enable a managed object to obtain a network capability for supporting the requirement information of the deterministic communication service.

After obtaining the requirement information, the communication service assurance management functional entity may determine the network function configuration of the deterministic communication service based on the requirement information. It can be learned from the foregoing descriptions that a network function (the managed object) includes a plurality of NSSMFs. In this case, the requirement information may be first divided into a plurality of slice requirements, and then corresponding network function configurations are generated based on the slice requirements.

Specifically, because the requirement information includes the latency requirement and the reliability requirement, correspondingly, the network function configuration may include a latency-related network function configuration and a reliability-related network function configuration. The latency-related network function configuration may be further divided into a RAN-latency-related network function configuration and a CN-latency-related network function configuration based on the NSSMFs. Specifically, the RAN-latency-related network function configuration may include one or more of the following: a subframe length being less than the preset threshold, grant-free scheduling, a low-latency random access manner, a low-latency uplink feedback manner, a packet data convergence protocol (Packet Data Convergence Protocol, PDCP) layer out-of-order delivery function, and a low-latency connection handover method. That the subframe length is less than the preset threshold means that the subframe length is set to be an extremely short value, and the preset threshold may be 1 ms. The extremely short subframe length may be used to increase a data packet transmission rate and reduce data packet transmission latency. The grant-free scheduling is short for uplink grant-free scheduling, and means that a base station activates an uplink grant for a terminal once, and when the terminal receives no deactivation, the terminal always uses a resource specified in a 1^{st} uplink grant to perform uplink data packet transmission, and the uplink grant does not need to be performed each time the data packet is sent. The low-latency random access manner is a manner in which a random access resource is preconfigured, so that random access can be completed by performing fewer steps. The low-latency uplink feedback manner means that feedback transmission of a plurality of hybrid automatic redundant retransmissions may be implemented in one slot. The low-latency connection handover manner is a multi-connection handover manner of UE, or means that the random access resource is preconfigured in a target cell. When determining the RAN-latency-related network function configuration based on the requirement information, the communication service assurance management functional entity may specifically determine the preset threshold that the subframe length needs to be less than, or determine whether to enable the grant-free scheduling, the low-latency random access manner, the low-latency uplink feedback manner, the packet PDCP layer out-of-order delivery function, the low-latency connection handover method, or the like.

The CN-latency-related network function configuration may include one or more of the following: a local user plane function (user plane function, UPF) configuration, a multi-access edge computing (multi-access edge computing, MEC) configuration, or a service continuity policy. The local UPF configuration is selecting a UPF that is close to a network location of a cell to which a user accesses, to establish a service session, and the MEC configuration is selecting a MEC that is close to the network location of the cell to which the user accesses, to process a service. The service continuity policy is a policy for the UE to be handed over between UPFs, for example, a manner in which a connection of a source UPF is maintained, and then is released after the UE successfully accesses a target UPF. That the communication service assurance management functional entity determines the CN-latency-related network function configuration may be specifically determining whether to enable the local UPF configuration or the MEC configuration, whether to enable the service continuity policy, an enabled specific continuity policy, and the like.

It can be learned that in this embodiment of this application, the latency-related network function configuration performed based on the requirement information of the deterministic communication service includes the RAN-latency-related network function configuration and the CN-latency-related network configuration. It is mainly considered that a low-latency requirement of the deterministic communication service is met by reducing latency in a communication connection process, a communication handover process, or a data transmission process.

Similarly, the reliability-related network function configuration may also be divided into a RAN-reliability-related network function configuration and a CN-reliability-related network function configuration. The RAN-reliability-related network function configuration may specifically include one or more of the following: a physical downlink control channel (physical downlink control channel, PDCCH) reliability enhancement configuration, physical layer multislot continuous transmission, PDCP multi-connection redundant transmission, multi-transmission-point coordinated transmission, or a reliability connection handover manner. The PDCCH reliability enhancement configuration is more simplified PDCCH downlink control information. The physical layer multislot continuous transmission means that different redundancy versions or a same redundancy version of the data packet is transmitted in a plurality of consecutive slots. The PDCP multi-connection redundant transmission means that the UE sends a same PDCP data packet to a plurality of cells or receives a same PDCP data packet from the plurality of cells. The multi-transmission-point coordinated transmission means that the UE performs transmission of a physical layer data code block with a plurality of transmission reception points. The reliability connection handover manner is a UE multi-connection (including dual-connection) handover manner, a conditional handover manner, or the like. That the communication service assurance management functional entity determines the RAN-reliability-related network function configuration may be specifically selecting one or more of the foregoing configuration manners based on the reliability requirement.

The CN-reliability-related network function configuration may include a UPF multi-connection redundant transmission method, which specifically means that the UE establishes at least one redundant session connection through one or more UPFs.

It can be learned that in this embodiment of this application, the reliability-related network function configuration performed based on the requirement information of the deterministic communication service includes the RAN-reliability-related network function configuration and the CN-reliability-related network configuration. It is mainly considered that effects of reducing the packet loss rate and improving reliability are achieved by adding a redundant connection point, a redundant transmission line, and a redundant transmission data packet, to meet a high-reliability requirement of the deterministic communication service.

In a possible case, requirement information of a reliability service may further include rate requirement information, for example, an average rate value, a maximum rate value, a minimum rate value, and/or an assured rate value; may include data packet length requirement information, for example, an average length value, a maximum length value, and/or a minimum length value of the data packet; and may further include requirement information of a maximum quantity of sessions (in other words, a maximum quantity of service connections). The requirement information may be implemented by using a bandwidth configuration, a network connection configuration, or the like. This is not further described in this embodiment of this application.

The following further describes, by using a specific example, a process in which the communication service assurance management functional entity determines the network function configuration based on the requirement information.

An example in which the deterministic communication service is a programmable logic controller (programmable logic controller, PLC) remote control service is used.

### Step 1:

(1) Obtain a service type 1 of an application: video surveillance (video backhaul for an object remotely controlled by a PLC) and application identification information AppId=001; and a service type 2 of the application: PLC control (action/operation control for the object remotely controlled by the PLC), and application identification information AppId=002.
(2) Obtain service requirement information corresponding to each application:
   for a video surveillance application:
   latency requirement information: transmission time interval information (average I-frame latency of 250 ms), survival time information (1000 ms), and combination information of latency and reliability (the average I-frame latency of 250 ms, a jitter of 20 ms, and a packet loss rate of 0.01%);
   rate requirement information: combination information of a rate and the reliability (an average rate value of 30 Mbps and the packet loss rate of 0.01%);
   data packet length requirement information (an average value of xxBype); and
   requirement information of a maximum quantity (5) of sessions or connections; and
   for a PLC control application:
      latency requirement information: transmission time interval information (30 ms), survival time information (100 ms), and combination information of latency and reliability (30 ms, a jitter of 2 ms, and a packet loss rate of 0.01%);
      rate requirement information: combination information of a rate and the reliability (an average rate value of 100 Kbps and the packet loss rate of 0.01%);
      data packet length requirement information (an average value of xxBype); and
      requirement information of a maximum quantity (50) of sessions or connections.

### Step 2:

The communication service assurance management functional entity decomposes the obtained requirement information into each network slice subnet, to obtain slice requirement information, where the slice requirement information may be specifically presented in a form of a network slice description profile (SliceProfile). The requirement information that is obtained through decomposition and that is of each application may be included in each network slice description profile SliceProfile after the application requirement profile AppProfile is assembled.

The PLC remote control service is used as an example, and examples of the foregoing service requirement decomposition information are as follows:
for the video surveillance application:
latency requirement information: the transmission time interval information (where the average I-frame latency of 250 ms is decomposed into a RAN network slice subnet, a CN network slice subnet, and a TN network slice subnet of 150 ms, 50 ms, and 50 ms respectively), the survival time information (where 1000 ms is decomposed into the RAN network slice subnet, the CN network slice subnet, and the TN network slice subnet of 800 ms, 100 ms, and 100 ms respectively), the combination information of the latency and the reliability (where decomposition information of the average I-frame latency is as above, and both the jitter of 20 ms and the packet loss rate of 0.01% are applicable to the RAN network slice subnet, the CN network slice subnet, and the TN network slice subnet);
rate requirement information: the combination information of the rate and the reliability (where both the average rate value of 30 Mbps and the packet loss rate of 0.01% are applicable to the RAN network slice subnet, the CN network slice subnet, and the TN network slice subnet);
data packet length requirement information (where the average value of xxBype is applicable to the RAN network slice subnet, the CN network slice subnet, and the TN network slice subnet); and
requirement information of a maximum quantity of sessions or connections (where the maximum quantity being 5 is applicable to the RAN network slice subnet, the CN network slice subnet, and the TN network slice subnet); and
for the PLC control application:
   latency requirement information: the transmission time interval information (where 30 ms is decomposed into the RAN network slice subnet, the CN network slice subnet, and the TN network slice subnet of 20 ms, 5 ms, and 5 ms respectively), the survival time information (where 100 ms is decomposed into the RAN network slice subnet, the CN network slice subnet, and the TN network slice subnet of 80 ms, 10 ms, and 10 ms respectively), the combination information of the latency and the reliability (where decomposition of the average latency is as above, and both the jitter of 2 ms and the packet loss rate of 0.01% are applicable to the RAN network slice subnet, the CN network slice subnet, and the TN network slice subnet);
   rate requirement information: the combination information of the rate and the reliability (where both the average rate value of 100 Kbps and the packet loss rate of 0.01% are applicable to the RAN network slice subnet, the CN network slice subnet, and the TN network slice subnet);
   data packet length requirement information (where the average value of xxBype is applicable to the RAN network slice subnet, the CN network slice subnet, and the TN network slice subnet); and
   requirement information of a maximum quantity of sessions or connections (where the maximum quantity being 50 is applicable to the RAN network slice subnet, the CN network slice subnet, and the TN network slice subnet).

Step 3: The communication service assurance management functional entity determines, based on the requirement information or the slice requirement information obtained by decomposing the requirement information into the RAN network slice subnet, the CN network slice subnet, and the TN network slice subnet (or directly based on the requirement information), that the video surveillance application and/or the PLC control application are/is the deterministic communication service, and further determines an adaptive network function configuration that supports the deterministic communication service, for example, a related ultra-reliable low-latency (ultra-reliable low-latency communication, URLLC) network function configuration policy.
(1) A low-latency-related network function configuration policy is determined based on the latency requirement or the decomposed latency requirement information. For example, the RAN-latency-related network function configuration and/or the CN-latency-related network function configuration described above are/is determined.
(2) A reliability-related network function configuration policy is determined based on the reliability requirement or the decomposed reliability requirement information. For example, the RAN-reliability-related network function configuration and/or the CN-reliability-related network function configuration described above are/is determined.
(3) Further, based on the foregoing requirement information or a slice requirement, a combination requirement of the latency and the reliability may be supported according to a network resource policy such as a resource reservation or pre-scheduling method. A specific network function configuration (an enabling/disabling policy of a network function or a function combination) includes one or more of the following information:
   a RAN network resource policy configuration: (1) a service-based resource reservation policy in which based on an existing network slice-level assured resource, preferentially-used resource, and shared resource, a corresponding assured resource, preferentially-used resource, and shared resource are further configured for different applications respectively; and (2) a service-based resource pre-scheduling policy in which radio resources are respectively configured for different applications or radio bearers, and a radio resource is activated through radio resource control (Radio Resource Control, RRC), medium access control (Medium Access Control, MAC), or a physical downlink control channel (PDCCH), or in another manner.

The following uses the PLC control application in the PLC remote control service as an example to describe a method for configuring low latency and high reliability for the RAN network slice subnet and the CN network slice subnet.

It is determined to enable the following RAN network function configuration policy switches: the PDCP out-of-order delivery, the PDCP multi-connection redundant transmission, dual-connection handover, and an assured resource configuration corresponding to the PLC control service.

It is determined to enable the following CN network function configuration policy switches: UPF sinking and the UPF multi-connection redundant transmission.

It should be noted that, after obtaining the requirement information, the communication service assurance management functional entity may not directly determine the network function configuration, but determines the configuration requirement indication information. The configuration requirement indication information indicates a configuration requirement that needs to be obtained to meet the requirement information. After obtaining the configuration requirement indication information, the communication service assurance management functional entity may send the configuration requirement indication information to a provisioning management entity, and the provisioning management entity determines a network function configuration of each managed object based on the configuration requirement indication information.

In this embodiment of this application, for performance of the deterministic communication service, corresponding network function configurations are determined mainly for requirements of the low latency and the high reliability. These network function configurations can enable an entire communication network to obtain the network capability for supporting the requirement information of the deterministic communication service, to assure the deterministic communication service.

203: The communication service assurance management functional entity sends the network function configuration information to the managed object.

That the communication service assurance management functional entity sends the network function configuration information to the managed object may specifically include: The communication service assurance management functional entity sends the network function configuration to the provisioning management entity, and sends the network function configuration to the managed object through the provisioning management entity; or the communication service assurance management functional entity sends the configuration requirement indication information to a provisioned management entity, where provisioned requirement indication information is used by the provisioned management entity to obtain the network function configuration; and the communication service assurance management functional entity sends the network function configuration to the managed obj ect through the provisioned management entity.

Because the network function configuration information obtained by the communication service assurance management functional entity based on the requirement information may be the network function configuration, or may be the configuration requirement indication information, the communication service assurance management functional entity may perform one of the following operations.

203a: The communication service assurance management functional entity sends the determined network function configuration to the managed object (the managed object), or the communication service assurance management functional entity sends the determined network function configuration to the provisioning management entity, and the provisioning management entity forwards the determined network function configuration to the managed object.

203b: The communication service assurance management functional entity sends the configuration requirement indication information to the provisioning management entity, the provisioning management entity obtains the network function configuration based on the configuration requirement indication information, and then the communication service assurance management functional entity sends the network function configuration to the managed object.

After receiving the network function configuration, the managed object configures a network function of the managed object, for example, the RAN-latency-related network function configuration and/or the RAN-reliability-related network function configuration, and the CN-latency-related function configuration and/or the CN-reliability-related network function configuration.

In some possible cases, after completing the configuration of the network function of the managed object, the managed object may further respond to a configuration result. Therefore, the method may further include the following steps.

204: The communication service assurance management functional entity receives a response message sent by the managed object or the provisioning management entity, where the response message includes configuration result information for the network function configuration.

205: The communication service assurance management functional entity sends a requirement information processing response message to a consumer of the deterministic communication service, where the requirement information processing response message includes the configuration result information.

After completing the configuration of the network function of the managed object, the managed object sends the response message to the communication service assurance management functional entity. The response message includes the configuration result information, and may specifically include whether the configuration succeeds, an actual configuration of the network function of the managed object, or the like. After receiving the response message, the communication service assurance management functional entity may directly forward the response message to the NSMF consumer, or may encapsulate the configuration result information in another message and send the configuration result information to the NSMF consumer, to complete an entire deterministic communication service assurance process.

It can be learned that in this embodiment of this application, the communication service assurance management functional entity obtains the requirement information of the deterministic communication service from the consumer of the deterministic communication service. Because the requirement information includes the latency requirement and the reliability requirement, the requirement information may be for determining that the service is the deterministic communication service. To obtain the network capability for supporting the requirement information of the deterministic communication service, a corresponding network function configuration needs to be determined. In this process, the deterministic communication service can be effectively assured.

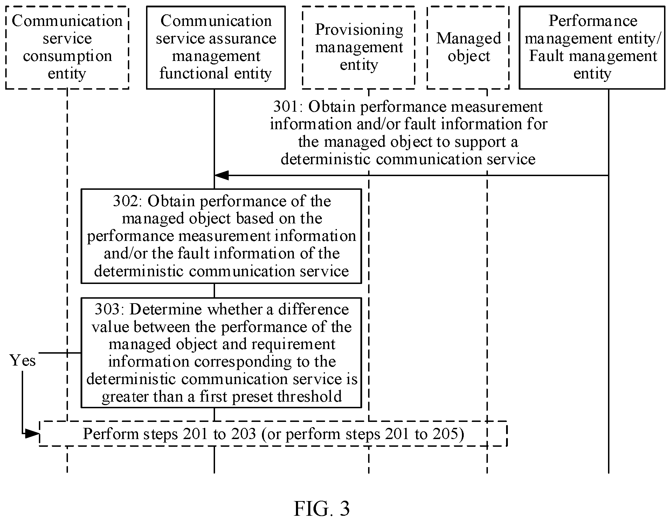

In addition, an embodiment of this application further provides a communication service measurement method. Refer to FIG. 3. The method includes the following steps.

301: A communication service assurance management functional entity obtains, from a performance management entity or a fault management entity, performance measurement information and/or fault information for a managed object to support a deterministic communication service.

302: The communication service assurance management functional entity obtains performance of the managed object based on the performance measurement information and/or the fault information of the deterministic communication service.

303: The communication service assurance management functional entity determines whether a difference value between the performance of the managed object and requirement information corresponding to the deterministic communication service is greater than a first preset threshold.

In this embodiment of this application, a network function configuration may be determined based on the requirement information of the deterministic communication service. For specific requirement information and a specific network function configuration, refer to the descriptions in the embodiment corresponding to FIG. 2. After the network function configuration corresponding to the deterministic communication service is obtained, it is possible that each managed object has not configured a network function of the managed object based on the network function configuration. In this case, the communication service assurance management functional entity may send a first measurement request message to the performance management (performance management, PM) entity/the fault management (fault management, FM) entity, where the first measurement request message is used to request to obtain the performance measurement information and/or the fault information for the managed object to support the deterministic communication service. Then, the communication service assurance management functional entity determines performance of a current managed object based on the performance measurement information and/or the fault information, and compares the performance with the requirement information corresponding to the deterministic communication service, to determine whether a requirement corresponding to the communication service is met after configuration modification or creation corresponding to the configuration of the network management function is performed on the managed object, in other words, determine whether the difference value between the performance of the managed object and the requirement information corresponding to the deterministic communication service is greater than the first preset threshold. For example, if the requirement corresponding to the communication service is met, it indicates that the managed object needs to re-configure the network function, and in this case, steps 201 to 203 (or 201 to 205) in the foregoing embodiment may be performed, so that an entire communication network obtains a network capability for supporting the requirement information of the deterministic communication service. If the requirement corresponding to the communication service is not met, it may be unnecessary to re-configure the network function of the managed object. This reduces an unnecessary configuration process.

It can be learned that in this embodiment of this application, the communication service assurance management functional entity obtains, from the performance management entity or the fault management entity, the performance measurement information and/or the fault information for the managed object to support the deterministic communication service, obtains the performance of the managed object based on the performance measurement information and/or the fault information of the deterministic communication service, and then compares the performance of the managed object with the requirement information corresponding to the deterministic communication service, to determine whether performance of a current managed object can meet the requirement of the deterministic communication service, so as to determine whether to subsequently re-determine the network function configuration and re-configure the network function of the managed object. In this process, in one aspect, the managed object can effectively configure the network function as needed; in another aspect, when a current network configuration can meet the requirement information of the deterministic communication service, the unnecessary network function configuration process can be reduced, thereby improving network communication efficiency.

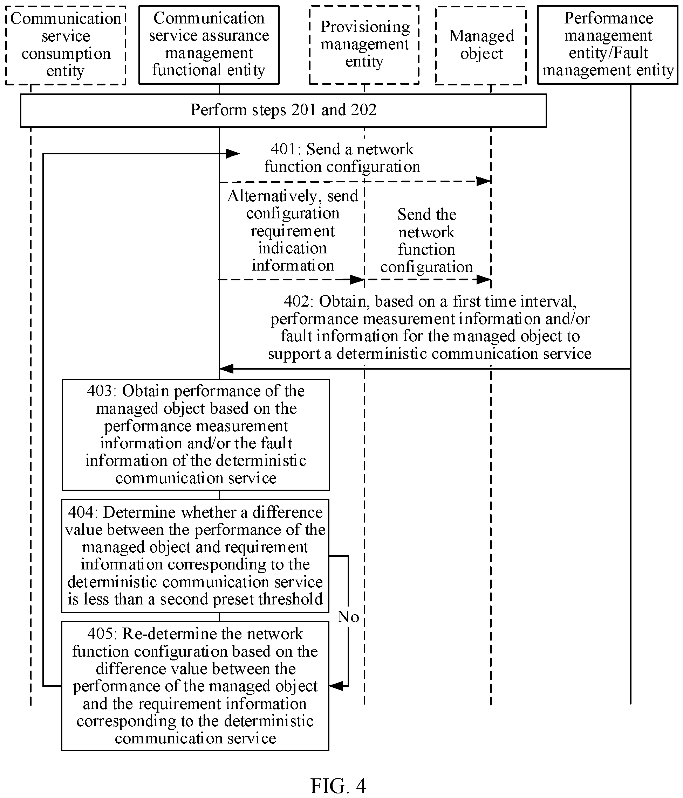

An embodiment of this application further provides another communication service measurement method. Refer to FIG. 4. The method includes the following steps.

401: A communication service assurance management functional entity sends a network function configuration to a managed object, or sends configuration requirement indication information to a provisioning management entity.

The configuration requirement indication information is used by the provisioning management entity to obtain the network function configuration and send the network function configuration to the managed object. The network function configuration is determined based on requirement information of a deterministic service.

402: The communication service assurance management functional entity obtains, from a performance management entity or a fault management entity based on a first time interval, performance measurement information and/or fault information for the managed object to support the deterministic communication service; or receives, from a performance management entity or a fault management entity, performance measurement information and/or fault information triggered by an event, where event triggering is performance data reporting triggered when performance measurement reaches a preset performance threshold or the fault information triggered when a preset fault condition is met.

403: The communication service assurance management functional entity obtains performance of the managed object based on the performance measurement information and/or the fault information of the deterministic communication service.

404: The communication service assurance management functional entity determines whether a difference value between the performance of the managed object and the requirement information corresponding to the deterministic communication service is less than a second preset threshold.

405: When the difference value is not less than the second preset threshold, re-determine the network function configuration based on the difference value between the performance of the managed object and the requirement information corresponding to the deterministic communication service. 401 to 405 are repeatedly performed until it is determined that the difference value is less than the second preset threshold.

In this embodiment of this application, similarly, the network function configuration may be determined based on the requirement information of the deterministic communication service. For specific requirement information and a specific network function configuration, refer to the descriptions in the embodiment corresponding to FIG. 2. In addition, after the network function configuration is determined, as described in step 203 in the foregoing embodiment, the communication service assurance management functional entity sends the network function configuration to the managed object, or sends the configuration requirement indication information to the provisioning management entity, so that the managed object configures a network function of the managed object based on the network function configuration.

Then, the communication service assurance management functional entity periodically obtains, from the performance management entity/the fault management entity based on the first time interval, the performance measurement information and/or the fault information for the managed object to support the deterministic communication service (in other words, after configuration creation or modification of the network function has been performed on the managed object based on the requirement information of the deterministic communication service), obtains the performance of the managed object based on the performance measurement information and/or the fault information of the deterministic communication service, and compares the performance of the managed object with the requirement information corresponding to the deterministic communication service. If the difference value between the performance of the managed object and the requirement information corresponding to the deterministic communication service is greater than or equal to the second preset threshold, it indicates that the managed object does not achieve an expected objective. For example, latency required for the requirement information of the deterministic communication service is 30 ms, but performance of a current managed object can only reach 50 ms. In this case, the network function configuration needs to be re-determined based on the difference value between the performance of the managed object and the requirement information corresponding to the deterministic communication service, so that after configuration creation or modification of the network function is performed on the managed object based on the re-determined network function configuration, a requirement of the deterministic communication service can be met. This process may need to be repeated several times until an expected effect is achieved.

It can be learned that in this embodiment of this application, after determining the network function configuration based on the requirement information of the deterministic communication service, and sending the network function configuration to the managed object, the communication service assurance management functional entity may further obtain, from the performance management entity or the fault management entity based on the first time interval, the performance measurement information and/or the fault information for the managed object to support the deterministic communication service, to determine, by using the performance measurement information and/or the fault information, whether the performance of the managed object meets the requirement of the communication service. If the performance of the managed object does not meet the requirement of the communication service, the network function configuration is modified, and measurement is performed repeatedly until it is determined that the performance of the managed object meets the requirement of the communication service. In this process, reliability of a deterministic communication service assurance process is improved.

The foregoing mainly describes, from a perspective of interactions between the network elements, the solutions provided in this application. It may be understood that to implement the foregoing functions, the foregoing network elements include corresponding hardware structures and/or software modules for performing the functions. A person skilled in the art should easily be aware that in combination with units and algorithm steps of the examples described in embodiments disclosed in this specification, this application can be implemented by hardware or a combination of the hardware and computer software. Whether a function is performed by the hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal, the control plane network element, the service function network element, the management function network element, or another network device may be divided into functional units based on the foregoing method examples. For example, the functional units may be divided based on functions, or two or more functions may be integrated into one processing unit. The integrated unit may be implemented in a form of the hardware, or may be implemented in a form of a software functional unit. It should be noted that in embodiments of this application, division into the units is an example, and is merely logical function division. During actual implementation, another division manner may be used.

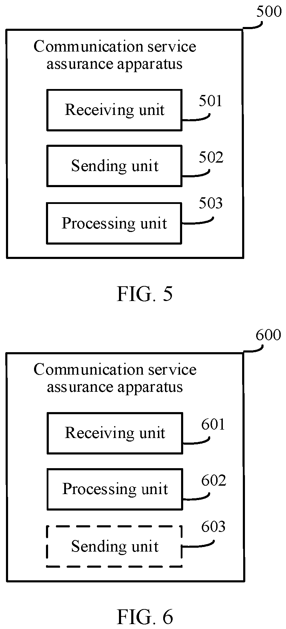

FIG. 5 shows a communication service assurance apparatus 500 according to an embodiment of this application. The communication service assurance apparatus 500 may be configured to perform the communication service assurance method and the specific embodiment that are applied to the communication service assurance management functional entity and that are in FIG. 2. In a possible implementation, as shown in FIG. 5, the apparatus 500 includes a receiving unit 501, a sending unit 502, and a processing unit 503.

The receiving unit 501 is configured to obtain requirement information of a deterministic communication service from a communication service consumption functional entity, where the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range.

The processing unit 503 is configured to determine network function configuration information based on the requirement information, where the network function configuration information includes a network function configuration or configuration requirement indication information, and the network function configuration or the configuration requirement indication information is used to enable a managed object to obtain a network capability for supporting the requirement information of the deterministic communication service.

The sending unit 502 is configured to send the network function configuration information to the managed object.

Optionally, the sending the network function configuration information to the managed object includes:
sending the network function configuration to a provisioning management entity, and sending the network function configuration to the managed object through the provisioning management entity; or
sending the configuration requirement indication information to a provisioned management entity, where provisioned requirement indication information is used by the provisioned management entity to obtain the network function configuration; and sending the network function configuration to the managed obj ect through the provisioned management entity.

Optionally, before the obtaining requirement information of a deterministic communication service from a communication service consumption functional entity, the receiving unit 501 is further configured to:
obtain, from the communication service consumption functional entity, an intent of assuring the deterministic communication service; and
the processing unit 503 is specifically configured to:
   generate the requirement information of the deterministic communication service based on the intent that is of assuring the deterministic communication service and that is obtained from the communication service consumption functional entity.

Optionally, the managed object includes one or more of the following: a network slice, a radio access network RAN network element, a core network CN network element, a transmission network TN network element, a RAN network slice subnet, a CN network slice subnet, or a TN network slice subnet.

Optionally, the network function configuration includes a latency-related network function configuration and/or a reliability-related network function configuration.

Optionally, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration includes at least one of the following: a local user plane function UPF configuration, a multi-access edge computing MEC configuration, or a service continuity policy.

Optionally, the reliability-related network function configuration includes a CN-reliability-related network function configuration and/or a RAN-reliability-related network function configuration, where the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration includes a UPF multi-connection redundant transmission apparatus.

Optionally, the requirement information is included in a service requirement profile of a network slice or a requirement profile of a network slice subnet.

Optionally, the processing unit 503 may be a central processing unit (Central Processing Unit, CPU).

Optionally, the receiving unit 501 and the sending unit 502 may be interface circuits or transceivers, and are configured to receive or send data or signaling from another electronic device.

Optionally, the apparatus 500 may further include a storage unit (not shown in the figure). The storage unit may be configured to store data and/or signaling. The storage unit may be coupled to the receiving unit 501, the sending unit 502, and the processing unit 503.

FIG. 6 shows another communication service assurance apparatus 600 according to an embodiment of this application. The communication service assurance apparatus 600 may be configured to perform the communication service assurance method and the specific embodiment that are applied to the managed object and that are in FIG. 2. In a possible implementation, as shown in FIG. 6, the apparatus 600 includes a receiving unit 601 and a processing unit 602.

The receiving unit 601 is configured to receive a network function configuration sent by a communication service assurance management functional entity or a provisioning management entity, where the network function configuration is used to enable a managed object to obtain a network capability for supporting requirement information of a deterministic communication service, and the requirement information includes a latency requirement and a reliability requirement, where the latency requirement indicates that transmission time of each data packet of the deterministic communication service is within a preset time threshold, and the reliability requirement indicates that a packet loss rate of the deterministic communication service is within a preset range.

The processing unit 602 is configured to configure, based on the network function configuration, a network function corresponding to the managed object.

Optionally, the managed object includes one or more of the following: a network slice, a radio access network RAN network element, a core network CN network element, a transmission network TN network element, a RAN network slice subnet, a CN network slice subnet, or a TN network slice subnet.

Optionally, the network function configuration includes a latency-related network function configuration and/or a reliability-related network function configuration.

Optionally, the latency-related network function configuration includes a CN-latency-related network function configuration and/or a RAN-latency-related network function configuration, where
the RAN-latency-related network function configuration includes at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration includes at least one of the following: a local user plane function UPF configuration, a multi-access edge computing MEC configuration, or a service continuity policy.

Optionally, the reliability-related network function configuration includes a CN-reliability-related network function configuration and a RAN-reliability-related network function configuration, where
the RAN-reliability-related network function configuration includes at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or the CN-reliability-related network function configuration includes a UPF multi-connection redundant transmission apparatus.

Optionally, the apparatus 600 further includes a sending unit 603, configured to send a response message to the communication service assurance management functional entity or the provisioning management entity, where the response message includes configuration result information for the network function configuration.

Optionally, the processing unit 602 may be a central processing unit (Central Processing Unit, CPU).

Optionally, the receiving unit 601 and the sending unit 603 may be interface circuits or transceivers, and are configured to receive or send data or signaling from another electronic device.

Optionally, the apparatus 600 may further include a storage unit (not shown in the figure). The storage unit may be configured to store data and/or signaling. The storage unit may be coupled to the receiving unit 601, the sending unit 603, and the processing unit 602.

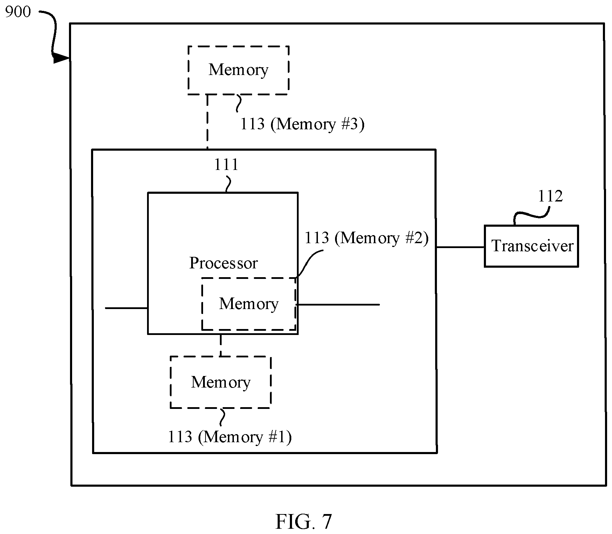

FIG. 7 is a diagram of a hardware structure of a communication apparatus according to an embodiment of this application. For structures of the communication service assurance apparatuses in FIG. 5 and FIG. 6, refer to the structure shown in FIG. 7. A communication apparatus 900 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method in any one of the foregoing embodiments.

The transceiver 112 is configured to communicate with another device, for example, receive a message from a first network element. The message includes an identifier of a multicast and/or broadcast service, a key of the multicast and/or broadcast service, and/or a key identifier of the multicast and/or broadcast service.

Optionally, the apparatus further includes a memory 113, configured to store the computer program instructions. Optionally, the memory 113 (a memory #1) is located inside the apparatus, and the memory 113 (a memory #2) is integrated with the processor 111, or the memory 113 (a memory #3) is located outside the apparatus.

It should be understood that the communication apparatus 900 shown in FIG. 7 may be a chip or a circuit, for example, a chip or a circuit that may be disposed in a terminal apparatus or a communication apparatus. The transceiver 112 may alternatively be a communication interface. The transceiver includes a receiver and a transmitter. Further, the communication apparatus 900 may further include a bus system.

The processor 111, the memory 113, and the transceiver 112 are connected by using the bus system. The processor 111 is configured to execute the instructions stored in the memory 113, to control the transceiver to receive a signal and send a signal, to complete steps of the first device or the second device in the implementation method in this application. The memory 113 may be integrated into the processor 111, or may be disposed separately from the processor 111.

In an implementation, it may be considered that a function of the transceiver 112 is implemented by using a transceiver circuit or a dedicated transceiver chip. It may be considered that the processor 111 is implemented by using a dedicated processing chip, a processing circuit, a processor, or a general-purpose chip. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It should be further understood that the memory mentioned in embodiments of this application may be a volatile memory or a non-volatile memory, or may include the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and serves as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, storing a computer program. The computer program includes instructions for performing the method that is in the foregoing embodiments and that corresponds to the communication service assurance management functional entity.

An embodiment of this application provides a computer storage medium, storing a computer program. The computer program includes instructions for performing the method that is in the foregoing embodiments and that corresponds to the managed object.

An embodiment of this application provides a computer storage medium, storing a computer program. The computer program includes instructions for performing the method that is in the foregoing embodiments and that corresponds to the communication service assurance management functional entity.

An embodiment of this application provides a computer storage medium, storing a computer program. The computer program includes instructions for performing the method that is in the foregoing embodiments and that corresponds to the managed object.

An embodiment of this application provides a computer program product including instructions. When the computer program product runs on a computer, the computer is enabled to perform the method that is in the foregoing embodiments and that corresponds to the communication service assurance management functional entity.

An embodiment of this application provides a computer program product including instructions. When the computer program product runs on a computer, the computer is enabled to perform the method that is in the foregoing embodiments and that corresponds to the managed obj ect.

It should be understood that sequence numbers of the foregoing processes do not mean execution sequences in embodiments of this application. The execution sequences of the processes should be determined based on functions and internal logic of the processes, and should not constitute any limitation on the implementation processes of embodiments of this application.

A person of ordinary skill in the art may be aware that in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

If the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication service assurance method, applied to a communication service assurance management functional entity, wherein the method comprises:
obtaining requirement information of a deterministic communication service from a communication service consumption functional entity, wherein the requirement information comprises a latency requirement and a reliability requirement, the latency requirement indicates that transmission time of each data packet of the deterministic communication service is within a preset time threshold, and the reliability requirement indicates that a packet loss rate of the deterministic communication service is within a preset range;
determining network function configuration information based on the requirement information, wherein the network function configuration information comprises a network function configuration or configuration requirement indication information, and the network function configuration or the configuration requirement indication information is used to enable a managed object to obtain a network capability for supporting the requirement information of the deterministic communication service; and
sending the network function configuration information to the managed object.

2. The method according to claim 1, wherein the sending the network function configuration information to the managed object comprises:
sending the network function configuration to a provisioning management entity, and sending the network function configuration to the managed object through the provisioning management entity; or
sending the configuration requirement indication information to a provisioned management entity, wherein provisioned requirement indication information is used by the provisioned management entity to obtain the network function configuration; and
sending the network function configuration to the managed object through the provisioned management entity.

3. The method according to claim 1, wherein before the obtaining requirement information of a deterministic communication service from a communication service consumption functional entity, the method further comprises:
obtaining, from the communication service consumption functional entity, an intent of assuring the deterministic communication service; and
the obtaining requirement information of a deterministic communication service from a communication service consumption functional entity comprises:
generating the requirement information of the deterministic communication service based on the intent that is of assuring the deterministic communication service and that is obtained from the communication service consumption functional entity.

4. The method according to any one of claims 1 to 3, wherein the managed object comprises one or more of the following: a network slice, a radio access network RAN network element, a core network CN network element, a transmission network TN network element, a RAN network slice subnet, a CN network slice subnet, or a TN network slice subnet.

5. The method according to claim 4, wherein the network function configuration comprises a latency-related network function configuration and/or a reliability-related network function configuration.

6. The method according to claim 5, wherein the latency-related network function configuration comprises a CN-latency-related network function configuration and/or a RAN-latency-related network function configuration, wherein
the RAN-latency-related network function configuration comprises at least one of the following: a subframe length being less than a preset threshold, grant-free scheduling, a low-latency random access manner, a low-latency uplink feedback manner, a packet data convergence PDCP layer out-of-order delivery function, or a low-latency connection handover method; or
the CN-latency-related network function configuration comprises at least one of the following: a local user plane function UPF configuration, a multi-access edge computing MEC configuration, or a service continuity policy.

7. The method according to claim 5, wherein the reliability-related network function configuration comprises a CN-reliability-related network function configuration and/or a RAN-reliability-related network function configuration, wherein the RAN-reliability-related network function configuration comprises at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration comprises a UPF multi-connection redundant transmission method.

8. The method according to claim 1, wherein the requirement information is comprised in a service requirement profile of a network slice or a requirement profile of a network slice subnet.

9. A communication service assurance method, applied to a managed object, wherein the method comprises:
receiving a network function configuration sent by a communication service assurance management functional entity or a provisioning management entity, wherein the network function configuration is used to enable the managed object to obtain a network capability for supporting requirement information of a deterministic communication service, and the requirement information comprises a latency requirement and a reliability requirement, wherein the latency requirement indicates that transmission time of each data packet of the deterministic communication service is within a preset time threshold, and the reliability requirement indicates that a packet loss rate of the deterministic communication service is within a preset range; and
configuring, based on the network function configuration, a network function corresponding to the managed object.

10. The method according to claim 9, wherein the managed object comprises one or more of the following: a network slice, a radio access network RAN network element, a core network CN network element, a transmission network TN network element, a RAN network slice subnet, a CN network slice subnet, or a TN network slice subnet.

11. The method according to claim 10, wherein the network function configuration comprises a latency-related network function configuration and/or a reliability-related network function configuration.

12. The method according to claim 11, wherein the latency-related network function configuration comprises a CN-latency-related network function configuration and/or a RAN-latency-related network function configuration, wherein
the RAN-latency-related network function configuration comprises at least one of the following: a subframe length being less than a preset threshold, grant-free scheduling, a low-latency random access manner, a low-latency uplink feedback manner, a packet data convergence PDCP layer out-of-order delivery function, or a low-latency connection handover method; or
the CN-latency-related network function configuration comprises at least one of the following: a local user plane function UPF configuration, a multi-access edge computing MEC configuration, or a service continuity policy.

13. The method according to claim 11, wherein the reliability-related network function configuration comprises a CN-reliability-related network function configuration and a RAN-reliability-related network function configuration, wherein
the RAN-reliability-related network function configuration comprises at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration comprises a UPF multi-connection redundant transmission method.

14. The method according to claim 9, wherein the method further comprises:
sending a response message to the communication service assurance management functional entity or the provisioning management entity, wherein the response message comprises configuration result information for the network function configuration.

15. A communication service assurance method, wherein the method comprises:
obtaining, by a communication service assurance management functional entity, requirement information of a deterministic communication service from a communication service consumption functional entity, wherein the requirement information comprises a latency requirement and a reliability requirement, wherein the latency requirement indicates that transmission time of each data packet of the deterministic communication service is within a preset time threshold, and the reliability requirement indicates that a packet loss rate of the deterministic communication service is within a preset range;
determining, by the communication service assurance management functional entity, network function configuration information based on the requirement information, wherein the network function configuration information comprises a network function configuration or configuration requirement indication information, and the network function configuration or the configuration requirement indication information is used to enable a managed object to obtain a network capability for supporting the requirement information of the deterministic communication service;
sending, by the communication service assurance management functional entity, the network function configuration information to the managed object; and
receiving, by the managed object, the network function configuration, and configuring, based on the network function configuration, a network function corresponding to the managed object.

16. A communication service assurance apparatus, used in a communication service assurance management functional entity, wherein the apparatus comprises:
a receiving unit, configured to obtain requirement information of a deterministic communication service from a communication service consumption functional entity, wherein the requirement information comprises a latency requirement and a reliability requirement, wherein the latency requirement indicates that transmission time of each data packet of the deterministic communication service is within a preset time threshold, and the reliability requirement indicates that a packet loss rate of the deterministic communication service is within a preset range;
a processing unit, configured to determine network function configuration information based on the requirement information, wherein the network function configuration information comprises a network function configuration or configuration requirement indication information, and the network function configuration or the configuration requirement indication information is used to enable a managed object to obtain a network capability for supporting the requirement information of the deterministic communication service; and
a sending unit, configured to send the network function configuration information to the managed object.

17. The apparatus according to claim 16, wherein the sending the network function configuration information to the managed object comprises:
sending the network function configuration to a provisioning management entity, and sending the network function configuration to the managed object through the provisioning management entity; or
sending the configuration requirement indication information to a provisioned management entity, wherein provisioned requirement indication information is used by the provisioned management entity to obtain the network function configuration; and
sending the network function configuration to the managed object through the provisioned management entity.

18. The apparatus according to claim 16, wherein before obtaining the requirement information of the deterministic communication service from the communication service consumption functional entity, the receiving unit is further configured to:
obtain, from the communication service consumption functional entity, an intent of assuring the deterministic communication service; and
the processing unit is specifically configured to:
generate the requirement information of the deterministic communication service based on the intent that is of assuring the deterministic communication service and that is obtained from the communication service consumption functional entity.

19. The apparatus according to any one of claims 16 to 18, wherein the managed object comprises one or more of the following: a network slice, a radio access network RAN network element, a core network CN network element, a transmission network TN network element, a RAN network slice subnet, a CN network slice subnet, or a TN network slice subnet.

20. The apparatus according to claim 19, wherein the network function configuration comprises a latency-related network function configuration and/or a reliability-related network function configuration.

21. The apparatus according to claim 20, wherein the latency-related network function configuration comprises a CN-latency-related network function configuration and/or a RAN-latency-related network function configuration, wherein
the RAN-latency-related network function configuration comprises at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration comprises at least one of the following: a local user plane function UPF configuration, a multi-access edge computing MEC configuration, or a service continuity policy.

22. The apparatus according to claim 20, wherein the reliability-related network function configuration comprises a CN-reliability-related network function configuration and/or a RAN-reliability-related network function configuration, wherein the RAN-reliability-related network function configuration comprises at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration comprises a UPF multi-connection redundant transmission apparatus.

23. The apparatus according to claim 16, wherein the requirement information is comprised in a service requirement profile of a network slice or a requirement profile of a network slice subnet.

24. A communication service assurance apparatus, used in a managed object, wherein the apparatus comprises:
a receiving unit, configured to receive a network function configuration sent by a communication service assurance management functional entity or a provisioning management entity, wherein the network function configuration is used to enable the managed object to obtain a network capability for supporting requirement information of a deterministic communication service, and the requirement information comprises a latency requirement and a reliability requirement, wherein the latency requirement indicates that transmission time of each data packet of the deterministic communication service is within a preset time threshold, and the reliability requirement indicates that a packet loss rate of the deterministic communication service is within a preset range; and
a processing unit, configured to configure, based on the network function configuration, a network function corresponding to the managed object.

25. The apparatus according to claim 24, wherein the managed object comprises one or more of the following: a network slice, a radio access network RAN network element, a core network CN network element, a transmission network TN network element, a RAN network slice subnet, a CN network slice subnet, or a TN network slice subnet.

26. The apparatus according to claim 25, wherein the network function configuration comprises a latency-related network function configuration and/or a reliability-related network function configuration.

27. The apparatus according to claim 26, wherein the latency-related network function configuration comprises a CN-latency-related network function configuration and/or a RAN-latency-related network function configuration, wherein
the RAN-latency-related network function configuration comprises at least one of the following: a subframe length being less than a preset threshold, grant-free scheduling, a low-latency random access manner, a low-latency uplink feedback manner, a packet data convergence PDCP layer out-of-order delivery function, or a low-latency connection handover apparatus; or
the CN-latency-related network function configuration comprises at least one of the following: a local user plane function UPF configuration, a multi-access edge computing MEC configuration, or a service continuity policy.

28. The apparatus according to claim 26, wherein the reliability-related network function configuration comprises a CN-reliability-related network function configuration and a RAN-reliability-related network function configuration, wherein
the RAN-reliability-related network function configuration comprises at least one of the following: a physical downlink control channel PDCCH reliability enhancement configuration, physical layer multislot continuous transmission, PDCP multi-connection redundant transmission, multi-transmission-point coordinated transmission, or a reliability connection handover manner; or
the CN-reliability-related network function configuration comprises a UPF multi-connection redundant transmission apparatus.

29. The apparatus according to claim 24, wherein a sending unit is further configured to:
send a response message to the communication service assurance management functional entity or the provisioning management entity, wherein the response message comprises configuration result information for the network function configuration.

30. A communication apparatus, wherein a structure of the apparatus comprises a processor, and may further comprise a memory, wherein the processor is coupled to the memory, and may be configured to execute computer program instructions stored in the memory, to enable the apparatus to perform the method according to any one of claims 1 to 8, or perform the method according to any one of claims 9 to 14.

31. A readable storage medium, configured to store instructions, wherein when the instructions are executed, the method according to any one of claims 1 to 8 is implemented, or the method according to any one of claims 9 to 14 is implemented.

32. A communication system, comprising the communication service assurance apparatus according to any one of claims 16 to 23, and/or comprising the communication service assurance apparatus according to any one of claims 24 to 29.
